# EUROPEAN PATENT SPECIFICATION

(11) **EP 0 574 252 B1**
(45) Date of publication and mention of the grant of the patent: **03.03.1999**
(21) Application number: 93304490.1
(22) Date of filing: 10.06.1993
(51) Int. Cl.: C05F 17/02, C05F 17/00

(54) **Treatment of sewage sludge**
Behandlung von Klärschlamm
Traitement des boues d'épuration

(30) Priority: 10.06.1992 ZA 924240; 22.12.1992 ZA 929965
(43) Date of publication of application: 15.12.1993
(73) Proprietor: PSM CONSTRUCTION CLOSE CORPORATION, Milnerton, Cape (ZA)
(72) Inventor: Terblanche, Johannes Stephanus, Cape Province (SA)
(74) Representative: Hillier, Peter

(56) References cited:
- EP-A- 0 490 688
- EP-A- 0 536 767
- GB-A- 2 120 564

## Description

### FIELD OF THE INVENTION

THIS INVENTION relates to the treatment of sewage sludge.

### BACKGROUND TO THE INVENTION

Modern sewage works produce vast quantities of sewage sludge. Once dewatered, the sludge must be disposed of and this is usually done by dumping the sludge in the sea or in a landfill.

Whilst dewatered sludge is known to have soil improving properties, it cannot be used for this purpose without further treatment as it contains pathogens. These can be removed by heat and it is known to compost the dewatered sludge before it is dug into the soil or used for other agricultural purposes, for example, as a growing medium.

It has been proposed in the art that the dewatered sludge be mixed with an organic material such as straw, bark, wood chips, leaves etc before being composted. The function of the solid material is to create air voids in what would otherwise be an air impervious mass of dewatered sludge. A mass of sludge that air cannot enter does not compost but rots, obnoxious odours being emitted by the rotting sludge.

Whilst the beneficial properties of composted sludge are known, and there have been many proposals as to how the dewatered sludge should be treated before being composted, it is a fact that only a small percentage of sewage sludge is used for agricultural purposes.

Experimental work has shown that a characteristic of dewatered sludge is its ability to agglomerate into lumps. If dewatered sludge and a product such as wood chips are mixed by hand, for example, by using spades to turn a pile of sludge and wood chips, lumps readily form. As air can only penetrate about 1.5mm into dewatered sludge, it will be understood that even small lumps will only be aerobic on the surrface. The centre consequently rots during composing. Consequently, whilst it is known that the mixing procedure should avoid lump formation, in practice it is found that with known mixing methods, lump formation is inevitable.

GB -A- 2120564 discloses a mixing apparatus having parallel augers which are located in a mixing vessel. The upper mixing augers have specially shaped flighting which provides straight edges linked by corners rather than the conventional helical edge. The lower conveying auger is a conventional helical auger with notches formed at intervals along its edge providing radially oriented surfaces which assist in engaging the material.

US -A-3706442 discloses a truck having a mixing box with internal augers which move material along the bottom of the box from the ends toward the midpoint along the bottom, upwardly and then back toward the ends. A lateral discharge conveyor is located at the midpoint to deliver material to one side. The discharge is located near the rear wheels of the truck.

### OBJECTS OF THE INVENTION

The main object of the present invention is to provide a method of mixing dewatered sewage sludge and an organic material which method avoids the formation of lumps of sewage sludge.

A further object of the present invention is to provide a method of mixing dewatered sewage sludge and organic material in such manner that the organic material is coated with a layer of dewatered sludge.

### BRIEF SUMMARY OF THE INVENTION

According to the present invention there is provided a method of treating dewatered sewage sludge which method comprises mixing the dewatered sewage sludge with an organic material by charging said sludge and said organic material into a mixer, feeding a first mass of sludge and organic material at a first velocity and feeding a second mass of sludge and organic material at a second velocity so that an interface is created between the relatively moving masses at which interface there is a shearing action between the two masses whereby the sludge is smeared over the organic material to form a coating on said material.

### BRIEF DESCRIPTION Of THE DRAWINGS

For a better understanding of the present invention, and to show how the same may be carried into effect, reference will now be made, by way of example, to the accompanying drawings in which:-
Figure 1 is a side elevation of mixing apparatus for carrying out the claimed method;
Figure 2 is a top plan view of the apparatus of Figure 1;
Figure 3 is an elevation illustrating one end of the apparatus;
Figure 4 is an elevation illustrating the other end of the apparatus;
Figure 5 is a section on the line V-V of Figure 2; and
Figure 6 is a section on the line VI-VI of Figure 2.

### DETAILED DESCRIPTION OF THE DRAWINGS

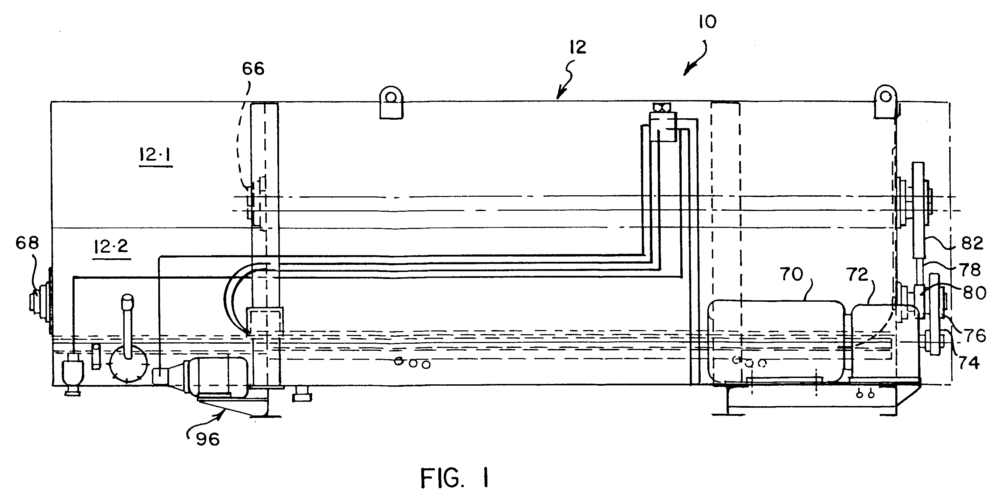

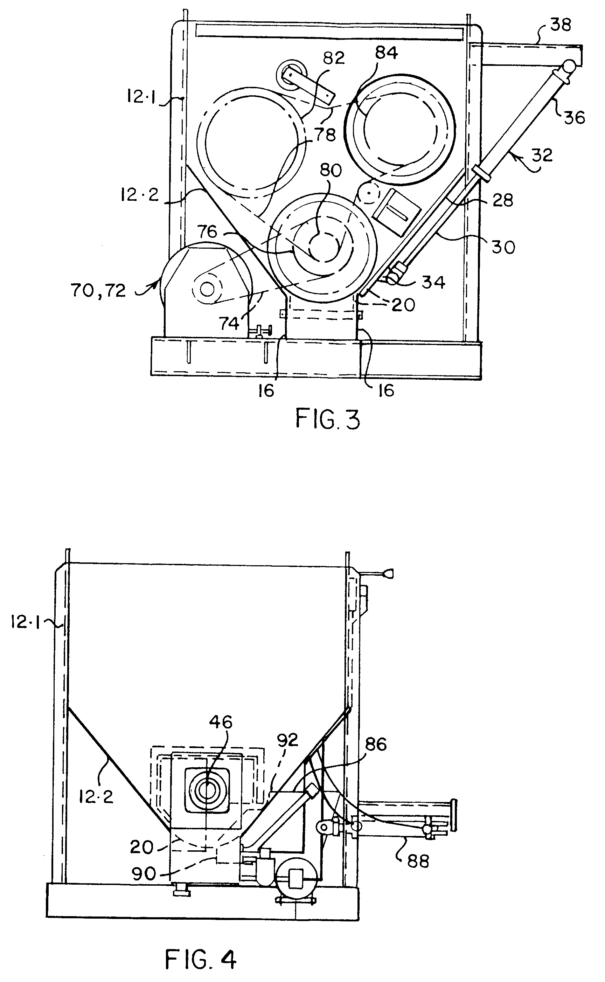

The apparatus illustrated in Figures 1 to 6 of the drawings comprises a horizontally elongate casing 10 having side walls 12 and end walls 14. The side walls 12 have vertical upper parts 12.1 and inclined lower parts 12.2 (see particularly Figures 3, 4 and 5), the lower parts 12.2 forming a funnel Below the funnel there is a downwardly open trough bounded by side plated 16.

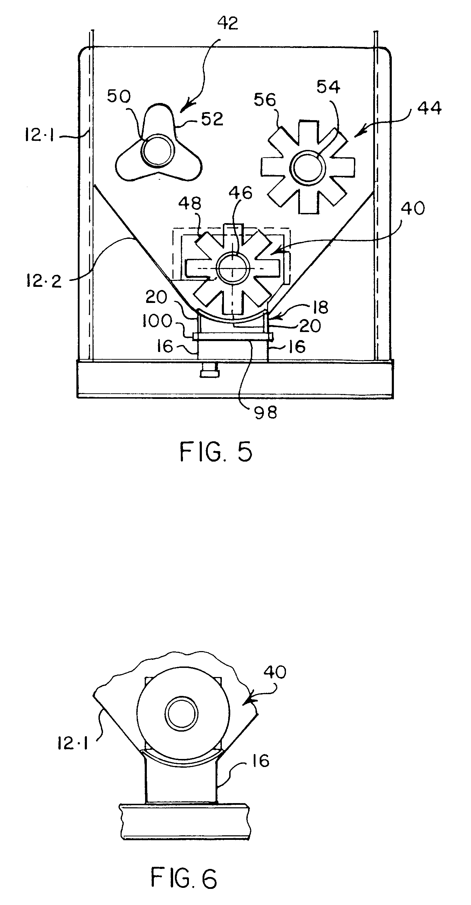

The elongate gap between the lower edges of the wall parts 12.2 is closed by an elongate plate 18 (see particularly Figure 5) the upper surface of which is concave. Two flanges 20 extend downward from the plate 18 into the trough between the side plates 16. The plate 18 extends the full length of the casing between the end walls 14.

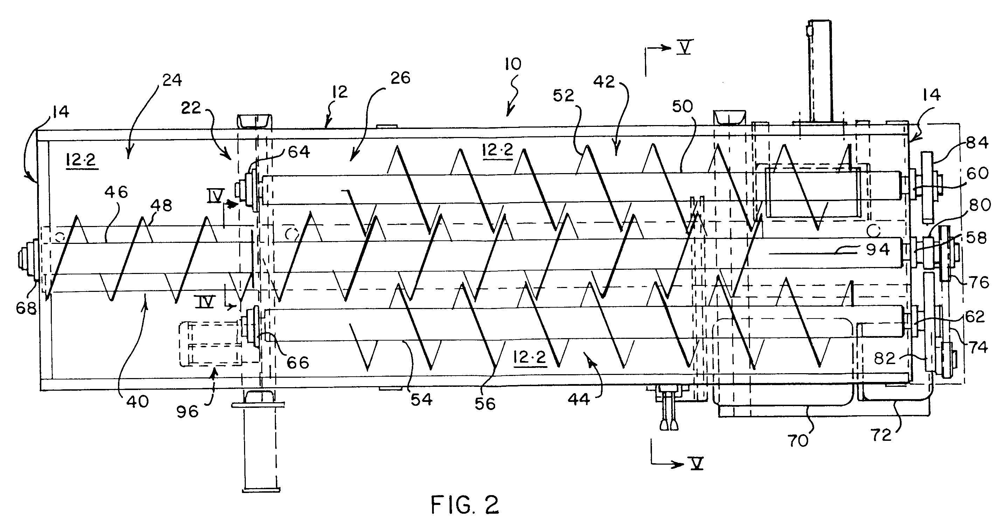

Within the casing 10 there is an internal partition designated 22, this dividing the casing into a smaller holding compartment 24 and a larger mixing compartment 26 (see particularly Figure 2).

An inclined door 28 (Figure 3) is provided for closing-off, whilst in the illustrated position, a discharge opening provided in the lower wall part 12.2 of the larger compartment 26. The inclined edges of the door are in guides and the rod 30 of an hydraulic cylinder 32 is attached to a lug 34 protruding from the underside of the door 28. The body 36 of the hydraulic cylinder is attached to a beam 38.

Three feed screws 40, 42 and 44 are provided within the casing 10. The screw 40 comprises a central shaft 46 and a helical flight 48. The screw 42 comprises a central shaft 50 and a helical flight 52, and the screw 44 comprises a shaft 54 and a helical flight 56. The flights 52 and 56 are of the same hand and the flight 48 is of the opposite hand.

The upper screws 42 and 44 rotate in the same direction as one another and are at slightly different heights. The screw 40 rotates in the same direction as the screws 42 and 44 and is below the screws 42 and 44. Each screw 40, 42 and 44 is mounted in bearings 58, 60 and 62 respectively carried by the right hand end wall 14 as shown in Figure 2. The left hand ends of the screws 42 and 44 are mounted in bearings 64, 66 carried by the partition 22. The screw 40 passes beneath the partition 22 and its shaft 46 is mounted in a bearing 68 carried by the other end wall 14 ie by the left hand end wall 14 as viewed in Figure 2.

The drive for the screws 40, 42 and 44 comprises an electric motor 70 and a gear box 72. The gear box 72 drives a chain 74 which is entrained around a chain wheel 76 which is fast with the shaft 46 of the screw 40. A further chain 78 is entrained around a second chain wheel 80 co-axial with the wheel 76 and around two further wheels 82 and 84 fast with the shafts 50 and 54 respectively. The wheel 84 is of smaller diameter than the wheel 82.

Turning now to Figure 4, reference numeral 86 designates a slide plate which forms a downward extension of the partition 22 and passes through a slot in the wall 12. Reference numeral 88 designates a hydraulic cylinder which is arranged outside the casing 10 and has its rod attached to that part of the slide plate 86 which is outside the casing 10. The purpose of the cylinder 88 is to move the plate 86 from the retracted position illustrated to an advanced position in which the leading edge 90 abuts the opposite side plate 16 and the arcuate cut-out 92 fits snugly around the shaft 46. The plate 86 effectively closes-off the compartment 24 from the compartment 26 when in its advanced position. The flight 48 has a gap in it in the region of the partition 22 and the plate 86 fits in this gap. There is additionally a disc (not shown) on the shaft 46 close to the partition 22.

As best seen in Figure 5, the flights 48 and 56 are different to the flight 52. More specifically the flights 48 and 56 each have eight triangular notches per turn in the peripheral edges thereof. The flight 52 on the other hand has three notches per turn and each notch is of a much greater included angle. Furthermore there are no sharp directional changes on the edge of the flight 52 which as a result is wave-like in configuration. Whilst the flights 48 and 56 are shown as being the same, it is possible for the notches of the flight 48 to have flat bottoms ie to be of truncated V-form. The screw 40 rotates more slowly than the screws 42 and 44 and the screw 42 rotates more slowly than the screw 44.

The differences in shaft speeds and the differing natures of the flights ensure that thorough mixing takes place. The gaps in the flights permit material to pass through the flights so that the flights not only move the material but cause mixing to occur along the flights.

The result is that within in the compartment 26 the relatively liquid sludge is smeared over the surfaces of the wood chips or the like in a very short period of time.

As best seen in Figure 2, the flight 48 terminates short of the right hand end wall 14. On the part of the shaft 46 between the end wall 14 and the end of the flight 48 are a number of diametrically opposed, radially protruding lifting blades 94. Two of these blades are adjacent the door 28 and others are beyond the door. Similar blades can be provided on the shaft 46 adjacent the partition 22 and at each end of each shaft 50 and 54 so that lifting and tumbling of the material occurs at each end of the larger compartment 26.

The pump and motor for the hydraulic system which operates the door 28 and slide plate 86 are shown at 96 in Figures 1 and 2.

The effectiveness of the screw 40 in mixing the contents of the compartment 26 depends partly on the gap between the flight 48 and the plate 18. As best seen in Figure 5, the lower edge of the flanges 20 rest on sleeves 98 which span between the side plates 16. Pins 100 pass through the sleeves and through holes in the plates 16. Once the pins 100 have been removed, the sleeves 90 can be displaced vertically and the pins then inserted through other holes thereby adjusting the position of the plate 18 and hence the width of the gap between the flight 48 and the plate 18.

The mixer operates on an intermittent basis. Whilst sludge and one or more other materials eg wood chips, wood shavings, straw etc are being mixed in the mixing compartment 26 to the right of the partition 22 by all three screws 40, 42 and 44, the holding compartment 24 to the left of the partition 22 is being filled with sludge. The slide plate 86 is at this time in its advanced position so that the compartments 24 and 26 are almost entirely isolated from one another. Thus whilst some stirring of the sludge occurs due to the action of the part of the flight 48 of the screw 40 to the left of the gap in the flight (as viewed in Figure 2), no significant amount of sludge is fed under the partition 22 to the right hand compartment 26.

Once mixing in the right hand compartment 26 has been completed, the door 28 is opened and the blades 94 of the screw 40 lift the mixed material out onto a conveyor belt (not shown) which carries it away. Once the compartment 26 is empty the door 28 is closed. Further wood, straw etc is then fed into the compartment 26 and the slide plate 86 is withdrawn by the cylinder 88 so that a new charge of sludge is fed into the compartment 26 from the compartment 24 by the screw 40. Once there is sufficient sludge in the compartment 26, the slide plate 96 is returned to its advanced position in which the compartments are again isolated from one another. Sludge feeds continuously into the compartment 24 from the sludge dewatering apparatus.

In the compartment 26 mixing of the sludge fed under the partition 22 with the material fed into the top of the compartment 26 takes place as well as some cutting of the material. The screws 42 and 44 displace the material at different speeds towards the partition 22. There is thus a shearing action along the centre line of the casing 10 between the faster moving material being propelled by the screw 44 and the material being moved more slowly by the screw 42. As the mixed material moved by the screws 42 and 44 reaches the partition 22, it tends to be forced downwards onto the screw 40. Its direction of movement then reverses and it feeds back along the casing. These is also a shearing action between the material moving in the upper part of the casing towards the partition 22 and the material moving in the opposite direction in the lower part of the casing. Between the plate 18 and the screw 40 chopping and mixing of the material takes place. The chopping and mixing action can be altered by raising or lowering the plate 18 as described thereby to vary the gap between the concave top face of the plate 18 and the underside of the screw 40.

Mixing continues until there are no lumps of sewage sludge in the compartment 26. The ideal mixture is one in which all the sludge is coated onto the vegetable matter which was fed into the compartment 26. The preferred vegetable matter is wood chips but straw, leaves, husks and any other vegetable material left over from farming or forestry can also be used. Shredded paper, cardboard or milled household vegetable refuse can be used. The coating should be from about 0.1 to 1.0mm thick for the best results. The coated vegetable matter is then piled and left to compost.

## Claims

1. A method of treating dewatered sewage sludge which method comprises mixing the dewatered sewage sludge with an organic material by charging said sludge and said organic material into a mixer, feeding a first mass of sludge and organic material at a first velocity and feeding a second mass of sludge and organic material at a second velocity so that an interface is created between the relatively moving masses at which interface there is a shearing action between the two masses whereby the sludge is smeared over the organic material to form a coating on said material.

2. A method as claimed in claim 1, in which a third mass is moved at a different velocity to the first and second masses, there being interfaces between the first and second masses, between the second and third masses and between the first and third masses at all of which interfaces a shearing action takes place.

3. A method as claimed in claim 2, wherein two of the masses are displaced in the same direction as one another but at different speeds and the other mass is displaced in the opposite direction to said two masses.

4. A method as claimed in claim 3, wherein said two masses are displaced side-by-side and at substantially the same level as one another, and said other mass is displaced in the opposite direction to said two masses and at a level below said two masses.

5. A method as claimed in any preceding claim and including charging dewatered sludge into a holding chamber from sludge dewatering apparatus whilst simultaneously mixing dewatered sludge and organic material in said mixing chamber, discharging mixed dewatered sludge and organic material from said mixing chamber, opening a gate, conveying dewatered sludge from the holding chamber to the mixing chamber and charging said mixing chamber with further organic material.

6. A method as claimed in any preceding claim in which the coating is between 0.1mm and 1.0mm thick.

## Patentansprüche

1. Verfahren zur Behandlung von entwässertem Klärschlamn, wobei dieses Verfahren die folgenden Verfahrensschritte umfaßt: Mischen des entwässerten klärschlammes mit einem organischen Material durch Aufgeben des Schlammes und des organischen Materials in einen Mischer, Zuführen einer ersten Masse von Schlamm und organischem Material mit einer ersten Geschwindigkeit sowie Zuführen einer zweiten Masse von Schlamm und organischem Material mit einer zweiten Geschwindigkeit, so daß eine Grenzfläche zwischen den sich relativ zueinander bewegenden Massen geschaffen wird und an dieser Grenzfläche findet eine Scherwirkung zwischen den beiden Massen statt, wodurch der Schlamm über das organische Material geschmiert wird um einen Oberzug auf diesem Material zu bilden.

2. Verfahren gemäß Anspruch 1, bei welchem eine dritte Masse mit einer Geschwindigkeit die verschieden ist von denjenigen der ersten und der zweiten Masse weiterbewegt wird, wobei Grenzflächen bestehen zwischen der ersten und der zweiten Masse, zwischen der zweiten und der dritten Masse sowie zwischen der ersten und der dritten Masse und wobei an allen diesen Grenzflächen eine Scherwirkung stattfindet.

3. Verfahren gemäß Anspruch 2, bei welchem zwei der Massen die eine in die gleiche Richtung wie die andere verschoben werden, jedoch mit unterschiedlichen Geschwindigkeiten während die andere Masse in die entgegengesetzte Richtung zu diesen zwei Massen verschoben wird.

4. Verfahren gemäß Anspruch 3, bei welchem die zwei Massen Seite an Seite verschoben werden und die eine im wesentlichen auf derselben Ebene liegt wie die andere, während die andere Masse in die entgegengesetzte Richtung zu diesen zwei Massen verschoben wird, dies auf einer Ebene die unter derjenigen dieser zwei Massen liegt.

5. Verfahren gemäß irgendeinem der vorhergehenden Ansprüche, welches die folgenden Verfahrensschritte umfaßt: ßeschicken einer Vorratskammer mit entwässertem Schlamm von der den Schlamm entwässernden Vorrichtung, bei gleichzeitigem Mischen von entwässertem Schlamm und organischem Material in der Mischungskammer, Entladen des gemischten entwässerten Schlammes und des organischen Materials aus der Mischungskammer, Öffnen einer Pforte, Beförderung des entwässerten Schlammes aus der Vorratskammer in die Mischungskammer und Beschicken der Mischungskammer mit weiterem organischen Material.

6. Verfahren gemäß irgendeinem der vorhergehenden Ansprüche bei welchem der Überzug eine Dicke zwischen 0,1 mm und 1,0 mm aufweist.

## Revendications

1. Procédé de traitement d'une boue d'égout débarrassée de son eau, ce procédé comprenant les étapes consistant à mélanger la boue d'égout débarrassée de son eau avec une matière organique, par chargement de ladite boue et de ladite matière organique dans un mélangeur, à alimenter avec une première masse de boue et de matière organique à une première vitesse et à alimenter avec une seconde masse de boue et de matière organique à une seconde vitesse, de sorte qu'une interface soit créée entre les masses exécutant un mouvement relatif, et qu'à cette interface il y ait une action de cisaillement entre les deux masses, à la suite de quoi la boue est étendue par-dessus la matière organique pour former une couche sur ladite matière.

2. Procédé selon la revendication 1, dans lequel une troisième masse est mise en mouvement à une vitesse différente de celle de la première et de la seconde masse, avec des interfaçes entre la première et la seconde masse, entre la seconde et la troisième masse et entre la première et la troisième masse, une action de cisaillement se produisant entre toutes ces interfaces.

3. Procédé selon la revendication 2, dans lequel deux des masses sont déplacées l'une et l'autre dans la même direction, mais à différentes vitesses et l'autre masse est déplacée dans la direction opposée à celle des deux dites masses.

4. Procédé selon la revendication 3, dans lequel les deux dites masses sont déplacées côte à côte et essentiellement l'une au même niveau que l'autre, et ladite autre masse est déplacée dans la direction opposée à celle des deux dites masses et à un niveau inférieur à celui des deux dites masses.

5. Procédé selon l'une quelconque des revendications précédentes et comprenant les étapes de chargement, dans une chambre de maintien, d'une boue débarrassée de son eau et venant d'un appareil débarrassant la boue de son eau, tout en mélangeant en même temps de la boue débarrassée de son eau et de la matière organique dans ladite chambre de mélange, de déchargement, à partir de ladite chambre de mélange, de la boue débarrassée de son eau et de la matière organique mélangées, d'ouverture d'une porte, de transmission de la boue débarrassée de son eau à partir de la chambre de maintien vers la chambre de mélange, et de chargement de ladite chambre de mélange avec davantage de matière organique.

6. Procédé selon l'une quelconque des revendications précédentes, dans laquelle la couche a une épaisseur comprise entre 0,1mm et 1,0 mm.
